# EUROPEAN PATENT APPLICATION

(11) **EP 0 646 502 A2**
(43) Date of publication of application: **05.04.1995**
(21) Application number: 94307046.6
(22) Date of filing: 27.09.1994
(51) Int. Cl.: B60R 22/10

(54) **Vehicle safety harness**

(30) Priority: 30.09.1993 GB 9320195
(71) Applicant: Carstyle Safety Products Ltd., Bedford MK40 4EF (GB)
(72) Inventor: Lennox-Lamb, Carey, Wootton Bedfordshire MK43 9JB (GB)
(74) Representative: Howden, Christopher Andrew

(57) **Abstract**

A vehicle safety harness, suitable for a child in a rear seat of a motor vehicle, comprises a sling 10 formed of a length of broad cargo webbing having straps 12 extending from its upper end for attachment to the vehicle bodywork, the sling 10 being connected at its lower end with a buckle 20 by way of straps 18. Continuation of the straps 12 form shoulder straps 30 and run through respective buckle parts 32 to form girth straps secured to respective sides of the sling 10, and continue as anchor straps 24 for attachment also to the vehicle. In use, a child is seated on the sling with his back against the upper part and the lower part is brought up between his legs so that the buckle part 32 carried by the respective shoulder strap (30)/girth strap (34) combination can be fastened to the buckle 20.

## Description

THIS INVENTION relates to a vehicle safety harness for a vehicle occupant and is of particular utility in relation to safety harnesses for young children travelling in motor cars or other motor vehicles.

It is an object of the present invention to provide a vehicle safety harness which will hold the occupants securely and yet is readily fitted and removed when desired.

According to the invention there is provided a vehicle safety harness comprising a length of broad flexible webbing having attachment means at an upper end for connection to a vehicle, the broad webbing being adapted, in use, to extend from said upper end down the back of the occupant and under the occupant's buttocks, a narrower portion of the harness, extending from the other end of said length of broad webbing, or formed by a narrowed portion of said broad webbing, extending between the occupant's legs and up in front of the occupant, said narrower or narrowed portion having its end further from the broad webbing connected directly or indirectly with shoulder straps which, in use, extend over the shoulders of the occupant to said upper end of said broad webbing or to said attachment means at said upper end of said broad webbing, the harness including girth straps extending, in use, from a portion of said broad webbing disposed behind the occupant at or below the waist to a portion of the harness disposed in front of the occupant.

An embodiment of the invention is described below by way of example with reference to the accompanying drawings, in which:-
FIGURE 1 shows a harness embodying the invention unfitted to a vehicle and laid out flat,
FIGURE 2 is a diagrammatic perspective view showing the harness in the position it occupies when fitted in a vehicle (not shown) and fastened about a child passenger (not shown) in the vehicle,
FIGURE 3 is a fragmentary perspective view showing the harness, fitted in a vehicle seat (indicated in broken lines) and opened out to allow a child to be placed in the harness preparatory to fastening the harness about the child,
FIGURE 4 is a fragmentary plan view illustrating a padded cover fitted to the sling part of the harness
FIGURE 5 is a fragmentary perspective view, from the front, showing a detachable bib panel fastened to the front of the harness, as worn, and
FIGURES 6 and 7 are schematic side views, partly in section, showing the securing of anchoring straps of the harness in different vehicle types.

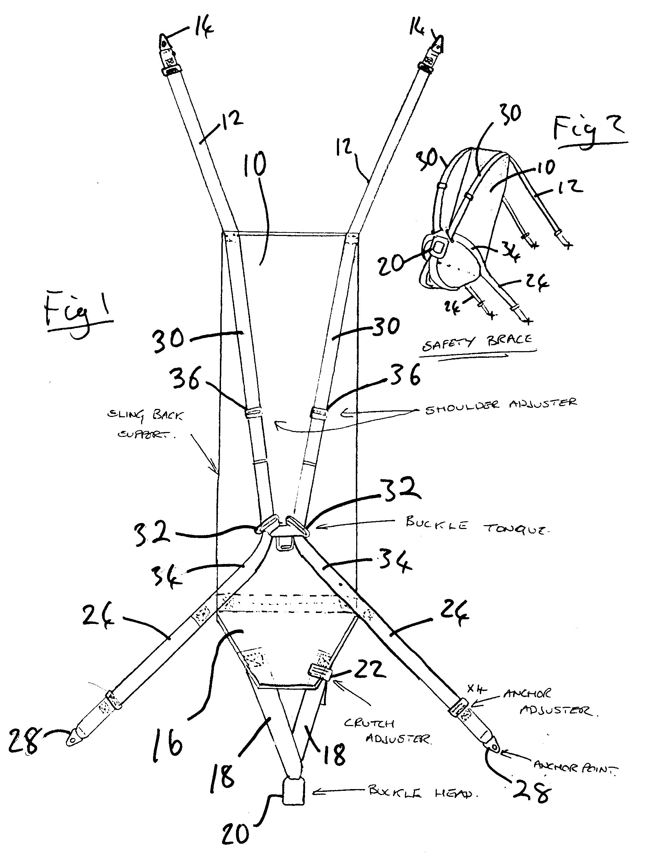

The harness illustrated in the drawings in intended to secure an infant or young child in a passenger seat in a motor car or other passenger vehicle. As shown in Figure 1, the harness comprises a body portion or sling 10 formed by a length of broad webbing, for example a length of "cargo handling" webbing about 20 cm in width. Such webbing comprises a woven strip of indefinite length and of substantially constant width (e.g. of about 20 cm in the present example) for example woven with threads of Nylon (polyamide) or other fibre. The sling 10 is formed from a length cut from such a strip so that the warp threads extend lengthwise in the sling, from its upper end to its lower end and with the weft threads extending horizontally in the fitted harness. The selvedges of the woven strip thus form the opposite side edges of the sling. At one, upper end, the webbing 10 is secured, at either side, to a respective strap 12. The straps 12 carry at their free ends mounting plates 14 which, in use, are bolted to a portion of the vehicle capable of sustaining the stresses likely to be exerted through the harness in the event of an accident.

At its lower end, the length 10 of webbing is trimmed laterally so as to provide a downwardly (as viewed in Figure 1) tapering end portion 16 to which are secured, by stitching, straps 18 which connect a buckle head 20 with the end portion 16 of the web 10.

Anchor straps 24 are secured to and extend from the broad web 10 at positions just above (as viewed in Figure 1) the tapered lower end portion 16 of the webbing 10. For convenience and for the sake of strength, the anchor straps 24 preferably form respective portions of a single length of webbing extending across the broad webbing 10 on the rear side thereof and stitched thereto. The straps 24 carry at their free ends respective attachment plates 28, for bolting to part of the vehicle capable of supporting stresses which may be applied by the harness in the event of an accident.

The lengths of webbing forming the straps 12 are continued downwardly, over the front of the webbing 10, as upper parts or shoulder straps 30, and are connected *via* respective adjusters 36 with further webbing lengths which provide lower portions of shoulder straps 30 and which pass through respective loops in respective buckle parts 32 to proceed as respective girth straps 34 which are secured to the respective straps 24 on the respective sides of the sling 10 at positions close to the vertical edges of the sling 10. Alternatively, the ends of the girth straps 34 may be secured directly to the webbing 10.

It will be understood that the straps 12, 18, 24, 30, 34 may be formed by respective lengths cut from woven Nylon webbing of a width substantially less than that forming sling 10, for example of 3 cm to 4 cm in width.

Each adjuster 36 is in effect a buckle which in manner known *per se* allows the effective length of its respective shoulder strap/girth strap combination to be increased or decreased. Likewise an adjuster 22 permits the effective length of the webbing loop 18 connecting the buckle head 20 with the end portion 16 to be increased or decreased. The straps 12 and 24 incorporate adjusters having a corresponding function, i.e. allowing increase or decrease in the effective lengths of the connection between the respective attachment plates 14, 28 and the webbing sling 10. Such adjusters are well known *per se* and will not be described in detail herein.

The harness shown in the drawings is intended to be fitted to the rear seat of a motor car, in the central seating position, with the anchor straps 24 extending between the seat back and the seat squab and the attachment plates 28 being bolted to securing points provided in the underlying vehicle bodywork, for example, to the anchorage points provided for the lap belt conventionally provided for the central seating position in the rear seat of a motor car. The webbing sling 10 is extended upwardly over the front surface of the seat back, so that the top end edge of the webbing 10 is disposed immediately adjacent the upper edge of the seat back and the straps 12 extend from the webbing 10 rearwardly over the upper edge of the seat back to the attachment plates 14. Where the vehicle is a saloon car, the straps 12 are relatively short and the attachment plates 14 are bolted to the rear window shelf in a manner known *per se* in relation to children's safety harnesses for motor cars. Where the harness is fitted in an estate car, the straps 12 are substantially longer and the attachment plates 14 are bolted to the floor at a position spaced substantially rearwardly of the seat, in a manner likewise well known *per se* in relation to conventional children's safety harnesses.

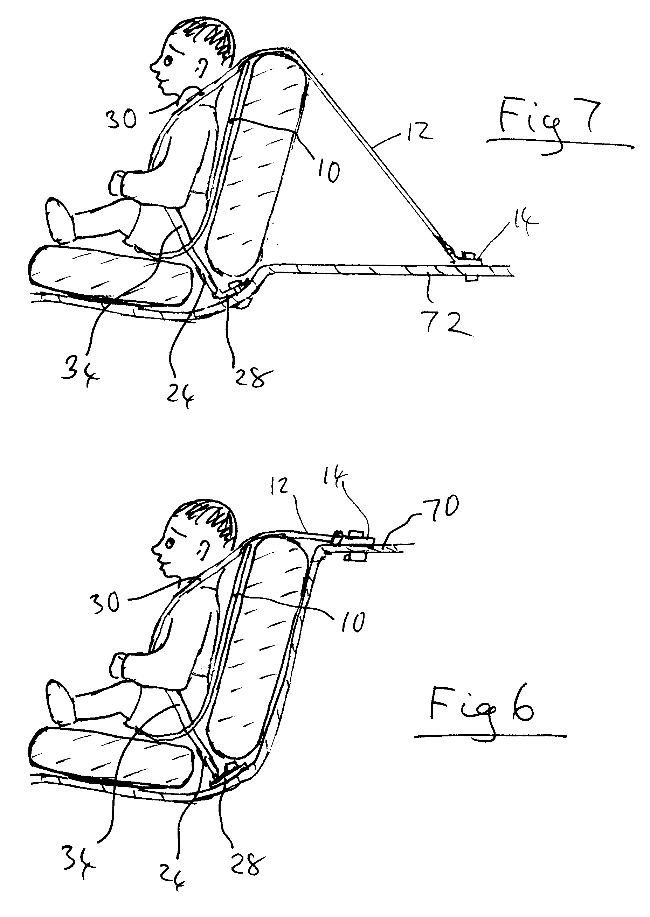

As shown in Figure 6, when fitted to a rear seat of a typical saloon car, the strips 12 may be extended over the upper edge of the seat back with the plates 14 being bolted to the portion 70 of the car bodywork providing the rear window shelf, whilst the straps 24 may be extended through the interstice between the seat cushion and the seat back and the anchor plates 28 bolted to the floor at this point. As shown in Figure 7, when the harness is fitted to a rear seat of an estate car, the straps 12 may be extended over the upper edge of the seat back with the plates 14 being bolted to the floor of the vehicle behind the rear seat, the straps 24 being again extended through the interstice between the seat back and seat base and the anchor plates 28 bolted to the vehicle floor at this point.

It will be appreciated that the portion 16 may, if desired, by tapered further downwardly than shown in Figure 1 and secured directly to the buckle head 20, foregoing the provision for adjustment of length provided by straps 18.

The buckle parts 32 have metal tongues which can be fitted, in juxtaposed relation, into the buckle head 20, the latter having a lock or latch mechanism operated by a push-button 40 which can be depressed to release the buckle parts 32. Thus, the combination of the buckle head 20 and the buckle parts 32 is similar to the buckle arrangements used in conventional car seat belts, except that the buckle head 20 is adapted to receive two locking tongues of two buckle parts 32 rather than a single locking tongue of one buckle part. As in car seat belts, the tongues of the buckle parts 32 are automatically locked in the buckle head 20 when they are inserted and are pushed from the buckle part 20 under spring pressure when the release button 40 is depressed.

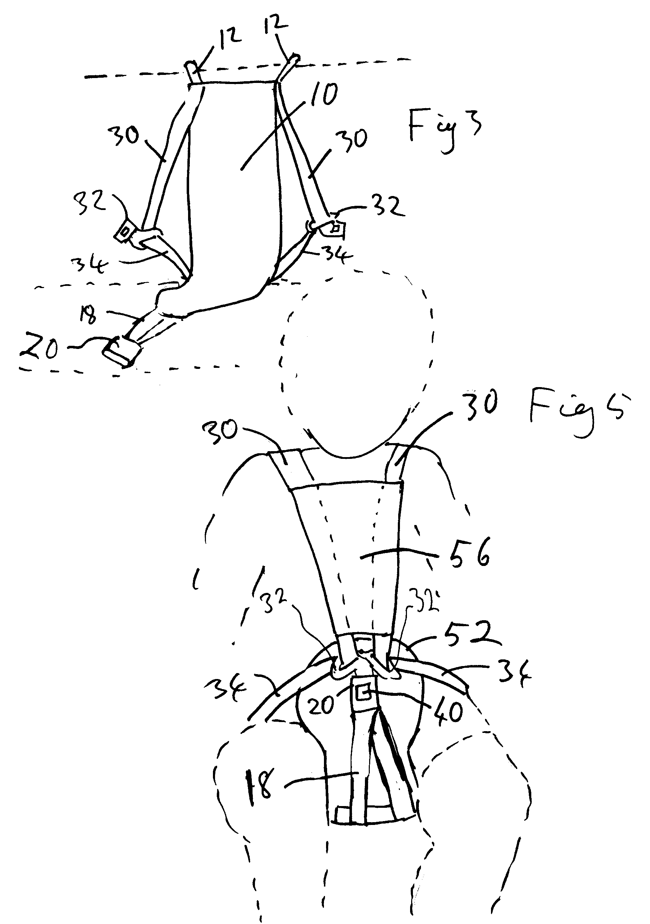

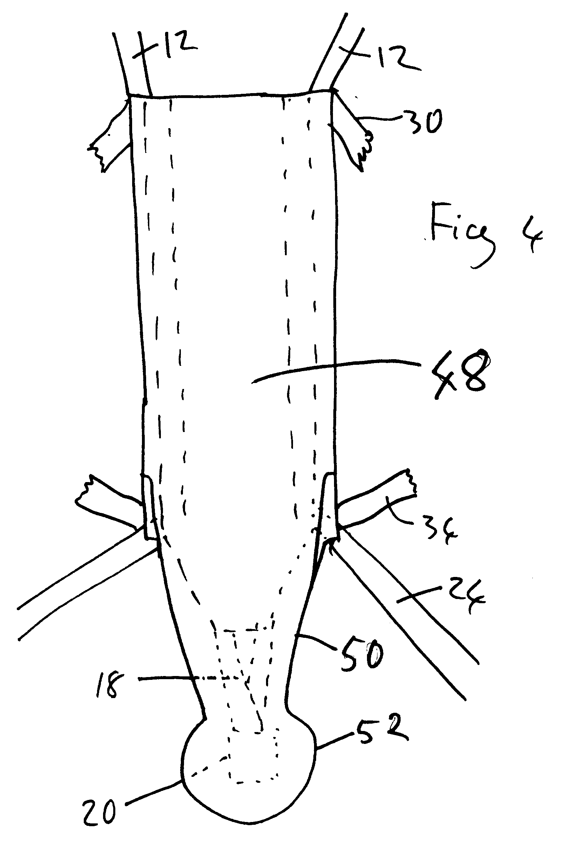

To secure a child in the harness, the harness is disposed in the position illustrated in Figure 3 in which the buckle parts 32 are each released from the buckle head 20 and the straps 30, 34, moved to the sides of the webbing sling 10 to allow the child to be seated on the base portion 16 of the sling 10 with its back against the remainder of the sling 10. The child's arms are extended through the spaces between the straps 30, 34 and the sling 10 so that the strap portions 30 extend over the child's shoulders. The buckle head 20 and straps 18 are then lifted upwardly between the child's legs and the buckle parts 32 brought round in front of the child and inserted in the buckle head 20. With the buckle parts 32 engaged in the buckle head 20 the harness adopts the configuration shown in Figure 2, with the girth straps 34 extending around the child's hips, the buckle head 20 with buckle parts 32 disposed in the region of the child's stomach and the straps 30 extending upwardly from the buckle assembly 20, 32 over the child's shoulders. The harness can be released by depressing the release button 40 and reversing the above sequence of steps.

In the interests of comfort, there is preferably superimposed on the webbing 10, straps 18 and buckle head 20, a padded fabric cover panel 48 which extends over the width and length of the webbing 10 and has edge portions (indicated in broken lines in Figure 4) which are folded around the back of the webbing 10 and may be secured e.g. by hook and pile fasteners, either to the rear surface of the webbing 10 or to one another (if the edge portions of the padded cover panel 48 are made extensive enough). The padded cover 48 includes a lower tapering region 50 which covers the web part 16 and straps 18, and a generally circular end part 52 which covers the buckle head 20 and, when the harness is fastened, the buckle parts 32, to prevent the buckle parts from chafing the occupant. The portion 52 may be more thickly padded than the remainder of the cover panel. It will be appreciated, therefore, that, in the fitted condition of the harness, the padded panel lies between the occupant's body and the webbing 10 and between the occupant's body and the buckle 20 and straps 18 as shown in Figure 5.

Figure 5 also illustrates a detachable fabric panel 56 which may be fitted, after the harness has been fastened about the occupant, so as to extend between the shoulder straps 30, in the region below the occupant's neck and above the buckle assembly 20, 32. This panel, besides acting as a bib, also serves to hinder a child occupying the harness from extricating the upper part of his or her body from the shoulder straps 30 by squeezing between the latter. The panel 56 is fitted by extending a rear portion of the panel behind the shoulder straps 30, so that a major portion of the panel 56 extends from one shoulder strap 30 on one side of the harness and a marginal edge portion extends beyond the other shoulder strap 30, subsequently folding said marginal edge portion around its adjacent shoulder strap 30 and folding the remainder of the panel about its adjoining shoulder strap 30 over the rear portion of the panel and onto the opposing folded-over marginal edge portion, to which it is secured by hook and pile fastener means provided on said marginal edge portion and on the opposing portion of the edge part of the major panel portion.

The features disclosed in the foregoing description, in the following claims and/or in the accompanying drawings may, both separately and in any combination thereof, be material for realising the invention in diverse forms thereof.

## Claims

1. A vehicle safety harness comprising a length of broad flexible webbing having attachment means at an upper end for connection to a vehicle, the broad webbing being adapted, in use, to extend, from said upper end, down the back of the occupant, and under the occupant's buttocks, a narrower portion of the harness, extending from the other end of said length of broad webbing, or formed by a narrowed portion of said broad webbing, extending, between the occupant's legs and up in front of the occupant, said narrower or narrowed portion having its end further from the broad webbing connected directly or indirectly with shoulder straps which, in use, extend over the shoulders of the occupant to said upper end of said broad webbing or to said attachment means at said upper end of said broad webbing, the harness including girth straps extending, in use, from a portion of said broad webbing disposed behind the occupant at or below the waist to a portion of the harness disposed in front of the occupant.

2. A vehicle safety harness according to claim 1 wherein, on each side of the harness, a respective said girth strap is connected, *via* a respective fastener element with a respective said shoulder strap, said fastener elements being detachably engaged with a fastener member connected directly or indirectly to said narrower or narrowed portion of the harness.

3. A vehicle harness according to claim 1 including a front panel which, in use, connects said shoulder straps and thus extends across the chest of the occupant, the connection of said front panel with at least one of said shoulder straps being a releasable connection to allow separation of said shoulder straps from one another and from said fastener member for fitting the harness to the intended occupant and/or release of the occupant.
